(19) Europäisches Patentamt
European Patent Office
Office européen des brevets

(11) Publication number: 0 262 613 A2

(12) **EUROPEAN PATENT APPLICATION**

(21) Application number: 87114048.9

(22) Date of filing: 25.09.87

(51) Int. Cl.4: C09D 3/58, //C08L63/00,C08L71:02,C08L67-:04,C08L75:06

(30) Priority: 26.09.86 US 911815

(43) Date of publication of application: 06.04.88 Bulletin 88/14

(84) Designated Contracting States: AT BE CH DE ES FR GB IT LI NL SE

(71) Applicant: UNION CARBIDE CORPORATION
39 Old Ridgebury Road
Danbury Connecticut 06817(US)

(72) Inventor: Colon, Ismael
57 Curtis Avenue
Piscataway New Jersey(US)
Inventor: Smith, Donald Foss, Jr.
988 Buxton Road
Bridgewater New Jersey(US)

(74) Representative: Wuesthoff, Franz, Dr.-Ing. et al
Patentanwälte Wuesthoff -v. Pechmann-Behrens-Goetz Schweigerstrasse 2
D-8000 München 90(DE)

(54) **Formable epoxy coatings.**

(57) A coating composition capable of substantial deformation without loss of continuity, adhesion, or protective properties. The coating composition comprises an epoxy resin mixed with a relatively soft modifier resin having certain specific properties. In a preferred embodiment, a particulate material, such as a zinc pigment, may also be included. A crosslinker may also be included.

EP 0 262 613 A2

# FORMABLE EPOXY COATINGS

## BACKGROUND OF THE INVENTION

### Field of the Invention

This invention relates to formable coatings utilizing epoxy resin binders.

### Description of the Prior Art

Thermosetting epoxy resins are well known in the art. Likewise, blends of such resins with relatively softer resins are known (see Lee, H.; Neville, K.; "Handbook of Epoxy Resins"; `: New York, 1967; Chap. 15.); blends of these types have been found useful to improve the flexibility of epoxy resins in processing such as injection molding.

Epoxy resins are also well known as coil coating resins, and in particular as binder resins in zi, corrosion-resistant coatings (see US - A - 3,110,691). Such coatings, while they provide excellent corrosion resistance on nondeformed surfaces, are often not satisfactory for uses in which the substrate and coating undergo substantial deformation, or where bake temperatures of less than about 205°C are used (so-called "low bake" systems). Typical of uses involving deformation are those involving the stamping and forming of sheet metal, as in the automobile manufacturing industry. As a result of such deformation, corrosion resistance is seriously degraded. Due to their lack of flexibility, epoxy resins derived from epichlorohydrin and Bisphenol A of epoxy equivalent weight less than 6000 have not found application in automotive zi coatings and other coatings requiring good formability. In such applications much higher molecular weight phenoxy resins are used, as described in copending European Application No. 86 113 893.1. It was, therefore, very unexpected that such a technique could yield equal results when applied to much lower molecular weight epoxy resins described in this application. While blending the epoxy resin with softer resins has been reasonably successful for flexibility the epoxy for, e.g., molding purposes, such blends have not proven to be satisfactory in the preparation of, e.g., solvent-borne, zi coating compositions. The problems encountered derive from a variety of factors: the need to maximize the concentration of the epoxy resin in order to preserve its contribution to corrosion resistance, the need to achieve compatibility among the blended resins, the need for solubility in certain solvents preferred by the coatings industry, the need to achieve certain glass transition temperatures, and the like. Accordingly, it is desirable to flexibilize the epoxy resin without significantly impairing either the corrosion resistance or the adhesion of the coating, while at the same time meeting the various processing needs indicated above. This unique balance of diverse properties has been realized by the instant invention.

In addition, with certain metal substrates it is necessary to use relatively low temperature bake cycles (peak metal temperature of less than about 205°C) in order to prevent the degradation of the good mechanical properties of the metal. With conventional epoxy resins, it is not practical to use such low temperature bake cycles, because the material does not adequately flow and wet out the substrate to provide good adhesion, which is crucial to the performance of the coating. Using the blends of the instant invention it is possible to provide good adhesion and coating performance even with such low temperature bake cycles.

Further, there are a variety of applications, where the coating must be resistant to solvents or to hot water or steam and still remain highly formable. An example of such an application is in draw-redraw can coatings, where the coatings must undergo extensive elongation. Such coatings are typically crosslinked in order to enhance their blush resistance under steam sterilization conditions, but this usually leads to coating failure under deep-draw conditions. It has been found that the instant coating compositions contribute greatly improved resistance to failure and blush to such crosslinked, draw-redraw coatings applications.

SUMMARY OF THE INVENTION

According to the instant invention there is provided a formable coating composition comprising:

(a) an epoxy resin

(b) 1 to 50 %, preferably 5 to 30 % , by weight of the total resign of a modifier resin which is relatively soft in comparison to the epoxy resin and is compatible with the epoxy resin and has:

(1) a reduced viscosity of 0.1 to 2, preferably 0.2 to 1, dl/g in tetrahydrofuran at 25°C.

(2) a glass transition temperature (Tg) of - 120 to 30, preferably - 100 to 0°C;

(3) a solubility in Cellosolve acetate at 25°C of at least about 1g/100g of solvent;

(4) a molecular weight of 2,000 to 90,000 preferably 6,000 to 60,000;

(c) optionally, a particulate material;

(d) optionally, a crosslinker.

The instant invention also provides a coated article comprising a metallic substrate and adhering thereto as a coating the composition described above.

In a preferred embodiment of the invention, the particulate material is zinc pigment, thereby providing a zi, corrosion resistant coating.

DESCRIPTION OF THE INVENTION

The combination of the epoxy resin with the modifier resin produces a coating composition which is formable. By that term is meant that the coating is able to withstand physical operations to the substrate (e.g., rolling, bending, stamping, cutting, etc.) without significant damage to the continuity and adhesion of the coating. Accordingly, the protective properties of the coating are preserved.

The epoxy resins useful in the invention are those of low to moderate molecular weight or epoxy equivalent weight. The preferred epoxy equivalent weight will be in the range of 185 to 8000, most preferably 450 to 6000. At epoxy equivalent weights significantly below the stated minimum, the beneficial effects of this invention are not observed. At epoxy equivalent weights significantly above the maximum stated, the materials are approaching phenoxy type materials.

Among the useful epoxy resins well known to the art are those produced by the reaction of dihydric polynuclear phenols, e.g., 2,2-bis-4-hydroxyphenyl)propane, or their ethers, and epihalohydrins, e.g., epichlorohydrin, of which the following formula is typical:

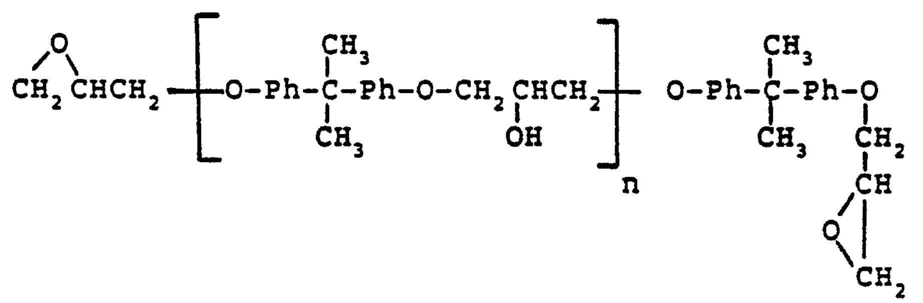

wherein Ph is phenyl and

wherein n = 0 to 30, preferably 3 to 20. Such epoxies are known to be brittle, friable, and lacking in toughness (see, e.g., US - A - 3,294,747), but nevertheless are so improved in the compositions of this invention that the resulting coatings can be readily formed and deep-drawn without significant loss of physical properties.

It will be understood that epoxy resins useful in this invention can be linear or branched, liquid or solid, and are commercially available in 100% solids form or as solvent solutions, and under many different trade names.

It is an advantage of this invention that the choice of epoxy resin is not narrowly critical, provided that the above-mentioned criteria for the modifier are met.

It will also be appreciated that epoxy resins, since they contain pendant hydroxyl groups, are crosslinkable by materials, e.g., melamines, isocyanates, phenolics and urea-formaldehydes, which are reactive with hydroxyl groups.

The modifier resins useful in this invention are generally amorphous thermoplastic resins, but it is possible to use crystalline resins, provided the mixture of the modifier resin with the epoxy is generally amorphous. The modifier resins are relatively soft in comparison with the epoxy resin. By the term "relatively soft" is meant that the modifier resin has a tensile modulus of less than about 48300 N/cm$^2$ - (70,000 psi) at room temperature.

In the useful modifier resins must be compatible with the epoxy resin. By the term "compatible" is meant that a homogeneous mixture is obtained at room temperature having a single phase and a single Tg.

Moreover, useful modifier resins must meet the specific criteria identified above as to reduced viscosity, molecular weight, glass transition temperature, and solubility in Cellosolve acetate.

Suitable general classes of polymers that are compatible with epoxy are: polyesters, polyester urethanes, polyether urethanes, and polyalkylene ethers (such as Polyox, polyethylene glycols, and UCON fluids). The preferred materials are aliphatic polyesters, such as those derived from epsilon-caprolactone. These include a variety of lactone-based polyols and polymers, for example TONE polyols and polymers available from Union Carbide Corp., as described in U.S. - A - 3,169,945. These materials are produced by the catalytic polymerization of an excess of a lactone, e.g., caprolactone, and an organic polyfunctional initiator having at least two reactive hydrogen atoms. Illustrative of the latter are diols, such as ethylene glycol, triethylene glycol and 1,2-propylene glycol.

When the organic functional initiator is reacted with the lactone, a reaction occurs that can be represented in its simplest form by the equation

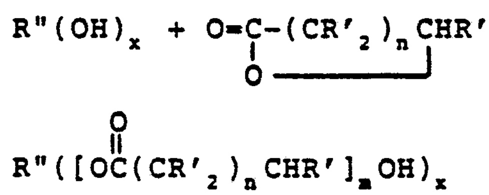

wherein n = 3-6, preferably 4.

In this equation, the organic functional initiator is the $R''(OH)_x$ and the caprolactone is

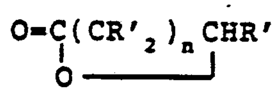

This can be caprolactone itself or a substituted caprolactone wherein R′ is an alkyl, alkoxy, aryl, cycloalkyl, alkaryl or aralkyl group, and R″ is an alkyl or alkoxy group, all as shown in U. S. - A - 3,169,945.

In formulating coatings within the scope of this invention, various important considerations should be kept in mind. Since epoxy resins themselves confer properties on the coating which are desirable for corrosion resistance (e.g., barrier properties) and for physical handling (e.g., anti-blocking), the concentration of the epoxy resin should be maintained as high as possible, consistent with the need to be able to deform the coating during manufacture and to meet the bake cycle required. Similarly, it is desirable to maintain the Tg of the epoxy/modifier resin blend as high as possible, consistent with the need to be able to deform, in order to prevent blocking of the coated metal when stored with adjacent surfaces in contact with each other, e.g., in roll or stacked sheet form. Ideally, a blend Tg of 30°C or greater is desired. Since the coating compositions of this invention are applied as solutions in organic solvents, the resins and concentrations should be selected for ease of application using standard equipment in the industry. Commonly used solvents include ketones (such as MEK, diethyl ketone, and cyclohexanone) and esters (such as CELLOSOLVE acetate (Union Carbide), Dibasic Esters (Du Pont) - mixtures of methyl esters of diacids, ethyl-3-ethoxypropionate, and the like). In addition, a variety of solvent blends of the above-mentioned solvents with aromatic solvents (such as toluene, xylene and naphtha) can be used.

When used, such co-solvents should be non-solvents for the epoxy and should be limited to about 50% by weight or less, based on the total solvent. For ease of application, the fully formulated coating composition should have a viscosity of no more than about 600 seconds, as measured with a No. 4 Ford cup at 25°C.

When a particulate material is included in the coating composition, its concentration is not narrowly critical, but usually should be less than 95 % by weight of the total coating, preferably 65 % to 90%. In the preferred, zi embodiment of the invention, commercially available zinc pigments having a particle size of 2 to 15 µm microns may conveniently be used. It is preferred to use zinc pigment having an average particle size of 6 to 7 µm.

It will be understood as well that the coating compositions of this invention may contain functional additives known to the art, e.g., crosslinking agents, suspending agents, viscosity modifiers, colorants, antioxidants, and the like.

Where used, crosslinking agents should be provided in sufficient concentration to maximize blush and solvent resistance while retaining flexibility for improved draw and adhesion performance. Such formulation is within the skill of the art, but typically the crosslinker will be 2-10%, preferably 4 - 8 % based on total resin solids.

In the examples below, the following procedure was used to make up the coating compositions. All components were charged to a 1-quart container and heated with mild stirring for about 30 minutes at 60-70°C. The container was removed from the heat and the contents were thoroughly mixed, using a Dispersator (available from Premier Mill Corp.) equipped with a 66.6 mm (2-5/8") Cowles head, for 5-10 minutes at about 1500 RPM. The container was then reheated for about 10 minutes to restore the contents to 60-70°C. The composition was then further mixed in a Dispersator equipped with a 63.5 mm (2-1/2") media disc having four 9.5 mm (3/8-inch) diameter holes it it. The mixer was started at about 1060 RPM, and about 80% by volume (based on total formulation) of metal oxide (e.g., aluminum or zirconium oxide) beads (2-mm diameter) was added. Mixing speed was increased to about 3,000 RPM and held there for 15-30 minutes while controlling the temperature at 60-70°C. Mixing was then stopped, and the composition was allowed to settle while cooling to room temperature, and the beads were removed by filtration.

Key properties of compositions so prepared were measured using the following procedures:

Fineness of grind: Determined using Hegman gauge;

Viscosity: No. 4 Ford cup at 25°C;

Specific Gravity: Using a 25 ml specific gravity bottle;

Non-volatiles: 1-2 g of paint are placed in an aluminum dish, weighed, dried in a circulating air oven at 130°C for 1 hour, and reweighed.

Coating compositions for test purposes were formulated according to the following recipe:

Epoxy resin (control) or epoxy/modifier resin blend 45 parts
Solvent 287 parts
Zinc pigment 300 parts
MPA 60X 11 parts
Aerosil R-972 2.7 parts
CaO 1.5 parts

In the above formulation, MPA 60X is an anti-settling agent available from NL Chemicals, Hightstown, NJ. Aerosil R-972 is a thickener available from Degussa Corp., Teterboro, NJ. Calcium oxide serves as a scavenger for water.

In the examples below, the following materials were used:

TONE 0260: a caprolactone polyol of about 3000 molecular weight which melts at 50-60°C and has a viscosity of about 1,500 mm²/s at 54.5°C available from Union Carbide Corp.
EPON 1001: solid DGEBA resin having an epoxide equivalent weight of 450-550.
EPON 1004: solid DGEBA resin having an epoxide equivalent weight of 875-1025.
EPON 1007: solid DGEBA resin having an epoxide equivalent weight of 2000-2500.
EPON 1009: an epoxy resin having an epoxide equivalent of 2500-4000.
EPON 1010: an epoxy resin having an epoxide equivalent of 4000-6000.
All materials are available from Shell Chemical Co.
CYMEL 370: a melamine resin available from American Cyanamid.

In the examples below, the formability evaluation procedure identified as the "Double-Draw" test is carried out as follows:

Circular samples (66 mm diameter) are cut from test panels 0.50 - 0.76 mm (200-300 mils) thick and are clamped (clamp pressure = 621 N/cm² (900 psi) in a Tinius Olsen ductility tester (Ductomatic A-12). A first draw is performed using a cup which is 35 mm OD × 26 mm high, with a 1 mm die clearance. A second draw is then performed using a cup which is 28 mm OD × 36 mm high, with the same die clearance as before. In both draws, the draw rate is 305 mm (12 inches) per minute. The double-drawn cups thus formed are degreased in hexane, dried, given visual ratings, and tape tested. The visual rating scale is as follows:

| RATING | DEFINITION |
|---|---|
| 1 | No skirt - smooth coat. |
| 2 | Skirt - smooth coat. |
| 3 | Generally smooth coat (90%) with slight breaks. |
| 4 | Moderate breaks in coat at least 1 large area. |
| 5 | Moderate breaks in coat with some scale in rest of the coat (30-50%). |
| 6 | Generally scaled (70%) appearance with at least one area of substrate exposed. |
| 7 | Poor coat, scaled appearance (90%), loose flakes and many areas of substrate exposed. |
| 8 | Nearly all of substrate exposed. |

For the tape test, the skirt is carefully removed from the second-draw cup and the cup is weighed on an analytical balance. The cup is taped around its circumference and the tape is then quickly removed. The cup is re-weighed, and the difference is reported as the weight loss. Alternatively, the tape may be weighed, then re-weighed after removal, the difference being reported as weight loss. The tape used is the No. 670 adhesion test tape described in ASTM D-3359, available from Paul N. Gardner Co., Florida.

The adhesion evaluation procedure identified in the examples as the "Olsen Button" test utilizes ball indentations prepared according to ASTM E643-78 using the Tinius Olsen Ductomatic A-12. This is a single-draw test. The tape test is performed on each button. Tape (as previously described) is placed over the button and pressed on the button using a pencil eraser. The tape is then removed within 60 seconds and rated relative to a pictorial chart standard used by General Motors and available from General Motors upon request. In this rating system, 0 represents total coverage of the tape with zi paint, while 10 represents essentially clean tape, i.e., essentially no removal of paint by the tape; thus, the higher the number the better the adhesion.

In the evaluation procedure identified in the examples as the "blush" test (Table V), a 76 $\times$ 102 mm panel of tin-free steel is coated with a 25% solids solution of resin to yield a dry coating weight of 1.24 mg/cm$^2$ (8 mg/in.$^2$) The panels are air-dried a minimum of 1/2 hour and baked at 205°C for 10 minutes. A 25.4 strip is cut from each test panel and placed in a 100 ml beaker containing water. Approximately 75% of the length of the strip is immersed in water. The panel and beaker are placed in an autoclave and heated at 121°C for 90 minutes. The test strips are then removed, patted dry using a Kimwipe, and then visually rated for blush. The exposed portion is rated separately from the immersed portion. The visual rating scale is as follows:

| Rating | Performance | or | Effect |
|---|---|---|---|
| 10 | Perfect | | None |
| 9 | Excellent | | Trace |
| 8 | Very good | | Very slight |
| 6 | Good | | Slight |
| 4 | Fair | | Moderate |
| 2 | Poor | | Considerable |
| 1 | Very poor | | Severe |
| 0 | No value | | Complete failure |

## EXAMPLES

The following examples illustrate various embodiments of the invention.

### Example 1

Using the coating compositions shown in the Tables below and the recipe described above, coatings were prepared and applied to steel test panels 0.5 - 0.76 mm (200-300 mils)thick using a No. 12 wire-wound rod. The panels had been commercially pre-coated with a zinc/chromium primer composition known in the trade as "Dacromet" (a trademark of Metal Coatings, International, Chardon, Ohio). The test panels were baked in a 260°C oven for 2 minutes and then quenched in a room temperature water bath. The resulting dry film thickness of coating of this invention was about 1 mm (0.4 mil). The results of the various tests described above are shown in the following tables.

Table I

Double-Draw Test

(Rating of 1 is best)

| Sample No. | Resin | Visual Rating | Weight Loss mg |
|---|---|---|---|
| 1 | EPON 1001 | * | 52.5 |
| 2 | 70/30 EPON 1001/ TONE 0260 | 1 | 6.3 |
| 3 | EPON 1004 | * | 51.2 |
| 4 | 70/30 EPON 1004/ TONE 0260 | 1 | 3.1 |
| 5 | EPON 1007 | 6 | 49.7 |
| 6 | 70/30 EPON 1007/ TONE 0260 | 1 | 2.0 |
| 7 | EPON 1009 | 7 | 65.0 |
| 8 | 70/30 EPON 1009/ TONE 0260 | 2-3 | 4.3 |
| 9 | EPON 1010 | 7 | 67.9 |
| 10 | 70/30 EPON 1010/ TONE 0260 | 2-3 | 7.6 |

*Coating cracked around the total circumference of the top of the cup with separation of continuous film.

Table I illustrates that blends of this invention produce coatings having much better appearance and adhesion after double-draw than the plain epoxy resins of the prior art, even when a relatively low temperature bake cycle is used.

Table II
Ball Indent (Olsen Button) Adhesion Test
(Rating of 10 is best)

| Sample No. | Binder Resin | Tape Rating |
|---|---|---|
| 1 | EPON 1001 | 0 |
| 2 | 70/30 EPON 1001/TONE 0260 | 5 |
| 3 | EPON 1004 | 0 |
| 4 | 70/30 EPON 1004/TONE 0260 | 7 |
| 5 | EPON 1007 | 2 |
| 6 | 70/30 EPON 1007/TONE 0260 | 6 |
| 7 | EPON 1009 | 3 |
| 8 | 70/30 EPON 1009/TONE 0260 | 7 |
| 9 | EPON 1010 | 6 |
| 10 | 70/30 EPON 1010/TONE 0260 | 8 |

Table II indicates that blends of this invention are better than the neat epoxy at 260° in this particular test.

Example 2

In order to evaluate resistance to corrosive environment, coated samples were subjected to salt spray testing according to ASTM B117-73 with 400 hours exposure time. In Table III, "Button Corrosion" visually measures corrosion at the deformed area (i.e., the button "dome"), while "Field Corrosion" measures corrosion in the flat (undrawn) area of the sample.

Table III

Salt Spray Corrosion Performance

| Sample No. | Binder Resin | Button Corrosion(a) | Field Corrosion(b) |
|---|---|---|---|
| 1 | EPON 1001 | 7 | 9 |
| 2 | EPON 1001/TONE 0260 | 5 | 7 |
| 3 | EPON 1004 | 7 | 10 |
| 4 | EPON 1004/TONE 0260 | 3 | 6 |
| 5 | EPON 1007 | 2 | 10 |
| 6 | EPON 1007/TONE 0260 | 1 | 8 |
| 7 | EPON 1009 | 3 | 10 |
| 8 | EPON 1009/TONE 0260 | 2 | 7 |
| 9 | EPON 1010 | 3 | 10 |
| 10 | EPON 1010/TONE 0260 | 2 | 7 |

(a) Ratings are 1-8 with 1 being best.

(b) Ratings are 1-10 with 10 being best.

The corrosion performance of the Olsen buttons on the panels indicates that the blends provide better corrosion protection in drawn areas due to their greater flexibility.

Example 3

Physical properties of the coating compositions exemplified in the preceding examples are shown in Table IV.

Table IV

Physical Properties of Coating Compositions

| Sample No. | Binder Resin | Ratio | Tg °C | Gardner Viscosity m Pa·s | % Solids |
|---|---|---|---|---|---|
| 1 | EPON 1001 | 100 | 55 | <22 | 25 |
| 2 | EPON 1001/ TONE 0260 | 70/30 | 8 | <22 | 25 |
| 3 | EPON 1004 | 100 | 66 | <22 | 25 |
| 4 | EPON 1004/ TONE 0260 | 70/30 | | <22 | 25 |
| 5 | EPON 1007 | 100 | 85 | 34 | 25 |
| 6 | EPON 1007/ TONE 0260 | 70/30 | 25 | 22 | 25 |
| 7 | EPON 1009 | 100 | 87 | 80 | 25 |
| 8 | EPON 1009/ TONE 0260 | 70/30 | 30 | 40 | 25 |
| 9 | EPON 1010 | 100 | 92 | 200 | 25 |
| 10 | EPON 1010/ TONE 0260 | 70/30 | 33 | 80 | 25 |

(a) °C

(b) Gardner Viscosity in Centipoise

Example 4

Formulations for crosslinking were prepared using the following recipe:

204 parts Cellosolve acetate

21 parts Aromatic 150 (an aromatic solvent blend available from Exxon)

75 parts Resin or Resin Blend

To the above 25% solids solution is added CYMEL 370 on the basis of parts CYMEL 370 per hundred parts resin (PHR). Compositions were formulated and tested with the results shown in Table V. For these tests, steel panels (as previously described) were coated using a #28 wire-wound rod. The wet panels were baked in a 400°C oven for 10 minutes. The dried coatings weighed approximately 8 mg/in.$^2$.

## Table V
## Crosslinked Coatings

| Sample No. | Resin | Ratio | CYMEL 370 PHR | Double-Draw (a) | Blush (b) |
|---|---|---|---|---|---|
| 1 | EPON 100 | 100 | 8 | * | 2 |
| 2 | EPON 1001/ TONE 0260 | 70/30 | 8 | 1 | 2 |
| 3 | Ciba 6084 | 100 | 8 | * | 4 |
| 4 | Ciba 6084/ TONE 0260 | 70/30 | 8 | 1 | 8 |
| 5 | EPON 1007 | 100 | 8 | 7 | 8 |
| 6 | EPON 1007/ TONE 0260 | 70/30 | 8 | 1 | 9 |
| 7 | EPON 1009 | 100 | 8 | 7 | 9 |
| 8 | EPON 1009/ TONE 0260 | 70/30 | 8 | 1 | 9 |
| 9 | EPON 1010 | 100 | 8 | 6 | 9 |
| 10 | EPON 1010/ TONE 0260 | 70/30 | 8 | 1 | 9 |

*Did not even pass first draw.

(a) 1 is Best; 8 is Worst
(b) 10 is Best; 0 is Worst

Table V demonstrates that blends of this invention provide crosslinked coatings which have excellent formability and blush resistance. Epoxy resins when crosslinked sufficiently to reduce blush are not able to undergo double-draw without failure. The blends, however, provide excellent formability and even better blush resistance than a epoxy product crosslinked at comparable levels.

## Claims

1. A formable coating composition comprising a epoxy resign, 1 to 50% by weight of the total resign of a modifier resin which is relatively soft in comparison to the epoxy resin and is compatible with the epoxy resin and has:

(1) a reduced viscosity of 0.1 to 2 dl/g in tetrahydrofuran at 25°C,
(2) a Tg of -120 to 30°C,
(3) a solubility in Cellosolve acetate at 25°C of at least 1 g per 100 g of solvent,
(4) a molecular weight of 2,000 Othello 90,000

and optionally, a particulate material and/or a crosslinker.

2. The coating composition of claim 1 wherein the concentratetion of the modifier resin is 5 to 30 % by weight.

3. The coating composition of claim 1 wherein the modifier resin has:

(1) a reduced viscosity of 0.2 to 1 dl/g in tetrahydrofuran at 25°C; and

(2) a Tg of -100 to 0°C.

4. The coating composition of claim 1 or 2 wherein the epoxy resin is a DGEBA resin with an epoxy equivalent weight of 450 - 6000.

5. The coating composition of claims 1 - 4 wherein the modifier resin is a polyalkylene oxide or a polyester, preferably an aliphatic polyester, especially an aliphalic polyester derived from epsilon-caprolactone or a polycaprolactone polyol or a polyester urethane or a polyether urethane.

6. The corrosion-resistant coating composition of any of claims 1 - 5 wherein the particulate material is zinc pigment.

7. The coating composition of claims 1 to 6 wherein the crosslinker is a melamine resin.